# FASCICULE DE BREVET EUROPEEN

(11) **EP 3 516 711 B1**
(45) Date de publication et mention de la délivrance du brevet: **04.11.2020**
(21) Numéro de dépôt: 17771818.6
(22) Date de dépôt: 07.09.2017
(51) Int. Cl.: H01M 2/20, H01M 10/0525, H01M 10/613, H01M 10/6562, H01M 2/10

(54) **DISPOSITIF DE BATTERIE PORTATIVE AVEC UN SYSTÈME PASSIF DE REFROIDISSEMENT PAR AIR**
TRAGBARES BATTERIEGERÄT MIT PASSIVEM LUFTKÜHLSYSTEM
PORTABLE BATTERY DEVICE WITH PASSIVE AIR COOLING SYSTEM

(30) Priorité: 20.09.2016 FR 1658791
(43) Date de publication de la demande: 31.07.2019
(73) Titulaire: Pellenc (Societe par Actions simplifiee), 84120 Pertuis (FR)
(72) Inventeur: PELLENC, Roger, 84120 Pertuis (FR); FORTIER, Frédéric, 84240 La Bastide des Jourdans (FR)
(74) Mandataire: Cabinet Nuss
(86) Numéro de dépôt international: PCT/FR2017/052383
(87) Numéro de publication internationale: WO 2018/055256

(56) Documents cités:
- EP-A1- 2 477 253
- CN-U- 202 282 401
- CN-U- 204 538 098
- CN-U- 205 141 048
- CN-U- 205 488 266
- JP-A- 2001 155 702
- US-A- 3 219 485
- US-A1- 2001 046 624
- US-A1- 2003 134 189
- US-A1- 2009 274 952
- US-A1- 2010 021 802
- US-A1- 2011 293 998
- US-A1- 2013 122 341
- US-A1- 2016 254 578

## Description

La présente invention concerne le domaine des sources autonomes d'alimentation électrique, en particulier les systèmes de batterie de puissance pouvant être transportés, voire portés, par l'utilisateur (généralement sur son dos), et a pour objet un dispositif de batterie portative intégrant un système passif de refroidissement par air.

De nombreuses réalisations de batteries portables ("battery pack" en anglais) pour l'alimentation d'outils de puissance sont déjà connues dans l'état de la technique.

Un tel bloc batterie est généralement composé d'un assemblage d'une pluralité d'éléments de batterie avec des corps étanches allongés, préférentiellement de forme cylindrique, comportant deux extrémités opposées.

Ces éléments sont, d'une part, disposés côte à côte et avec un espace interstitiel entre éléments voisins, d'autre part, arrangés en un bloc constitué d'un seul tenant ou d'au moins deux sous-blocs mutuellement superposés ou accolés et, enfin, raccordés électriquement entre eux au niveau de chacune de leurs extrémités opposées selon un assemblage série/parallèle prédéterminé formant ainsi deux faces opposée de connexion électrique, pour le bloc d'un seul tenant ou pour chaque sous-bloc.

En outre, un tel bloc batterie est communément logé dans un boîtier de forme parallélépipédique.

Un des défis majeurs rencontrés dans ces batteries, qui peuvent être utilisées dans des milieux polluants et/ou humides et avec des températures ambiantes élevées, consiste à répondre simultanément et de manière satisfaisante, d'une part, aux exigences de refroidissement nécessaires du fait de l'échauffement notable des éléments constitutifs lors des phases de charge et de décharge, notamment à courant élevés, d'autre part, aux exigences de durée de vie et de sécurité de fonctionnement, notamment d'isolation électrique, et d'absence d'oxydation de la connectique et, enfin, aux exigences de rigidité et de tenue mécanique nécessaires pour sa manipulation et son transport.

Une grande partie des outils électroportatifs grand public de faible tension (inférieure à 24 Volts) présentent des blocs batteries insérés dans un boitier totalement étanche, mais l'autonomie de ces batteries est toutefois relativement faible. Ainsi, même en cas de fort courant, la batterie se trouve déchargée avant que ses éléments n'atteignent, compte tenu de leur isolation dans le boitier étanche, des seuils de température critiques. En effet, même si la température de ces éléments, du fait de la puissance thermique dissipée par eux et non dissipée rapidement dans l'air ambiant, augmente rapidement compte tenu de l'isolation totale par le boitier étanche, ces éléments arrivent en fin de décharge avant d'atteindre une température élevée et refroidissent au cours du temps, la batterie ne délivrant alors plus de courant. L'autonomie de fonctionnement de telles batteries lors d'une décharge à courant élevé n'est généralement que de quelques minutes, et dans tous les cas bien inférieure à une heure.

Ce n'est pas le cas des applications professionnelles qui nécessitent des autonomies supérieures à une heure, parfois même de plusieurs heures, et requièrent de fait une gestion thermique des éléments de batterie lors de leur utilisation. Dans ce dernier cas, une isolation des éléments de batterie dans une coque étanche pour travailler en extérieur ne permet pas de délivrer des courants élevés, ce pour éviter une montée en température trop importante des éléments de batterie au cours du fonctionnement de la batterie.

Par le document US 2010/0136413, on connait une réalisation dans laquelle une pluralité d'éléments de batterie cylindriques sont montés entre deux parties de boîtier, puis encapsulés par injection de résine ou analogue.

Bien qu'aboutissant à une construction rigide et résistante, cette solution limite, voire réduit à zéro, les surfaces des cellules exposées à la circulation d'air, nécessitant le recours à une ventilation forcée en cas d'échauffement important des éléments. De plus, ce conditionnement des éléments de batterie entraîne un surpoids non négligeable et rend difficile le démantèlement de la batterie lors de son recyclage.

Il en est de même des constructions ressortant des documents WO 2013/139409 et WO 2014/079507, dans lesquels les blocs batterie sont logés dans des boîtiers avec de faibles ouvertures d'aération, nécessitant une circulation d'air forcée accompagnée, le cas échéant, de radiateurs thermiques arrangés autour des éléments.

Or, la réalisation de cette fonction de refroidissement actif par circulation d'air forcée consomme une partie de l'énergie de la batterie et réduit par conséquent son autonomie. En outre, la présence d'au moins un actionneur et de pièces mobiles entrainent une maintenance régulière, un poids plus important, et ces batteries ne sont pas utilisables dans des ambiances humides, voire sous la pluie, sans risquer une corrosion importante ou des courts-circuits au niveau des contacts des éléments de batterie.

Par le document US 3 219 485, on connait un pack batterie portable composé d'un petit nombre d'accumulateurs alcalins rechargeables, dans lequel les accumulateurs sont maintenus avec calage entre deux plaques séparées par une paroi perforée. La connexion électrique des accumulateurs s'effectue, d'une part, au niveau d'une seule de leurs extrémités montées dans une première plaque ajourée et, d'autre part, sur leurs flancs latéraux exposés à la circulation d'air de l'extérieur. Aucune connexion électrique des terminaux des accumulateurs encastrés dans la seconde plaque non ajourée n'est possible. Et enfin, compte tenu de l'utilisation d'un nombre important d'accumulateurs, mais aussi de leurs tolérances dimensionnelles de fabrication, il n'est pas possible d'obtenir une étanchéité entre les accumulateurs et les plaques ajourées, rendant impossible l'utilisation d'une telle batterie par temps de pluie sans risques de corrosion, voire de courts-circuits électriques, au niveau des connexions électriques.

Le but de la présente invention est de surmonter au moins les principaux inconvénients précités en fournissant une solution simple, passive, intégrée, sûre et peu coûteuse, permettant d'assurer un refroidissement efficace d'un dispositif de batterie du type évoqué en introduction, utilisable par temps de pluie, tout en assurant également une bonne isolation électrique, une construction rigide, une bonne résistance à la corrosion, un surpoids limité et facilitant son recyclage en fin de vie.

Les documents CN 205 488 266 U (Fig.1 - 3 poignée), CN 205 141 048 U (Fig.2 - 4 poignée) et CN 204 538 098 U (Fig.1 - 4 poignée) divulguent un boîtier permettant d'accommoder des batteries et comprenant également un moyen de préhension pour la manipulation du dispositif.

Le document US 2016/254578 A1 divulgue (Fig.3 et [0066]) un dispositif de batterie portative comportant une poignée de transport et comprenant un boîtier et un bloc batterie logé dans ce dernier, le bloc batterie étant composé d'une pluralité d'éléments de batterie disposés côte à côte et avec un espace interstitiel entre éléments voisins, arrangés en un bloc batterie constitué de deux sous-blocs mutuellement superposés, et raccordés électriquement entre eux au niveau de chacune de leurs extrémités opposées.

Toutefois, les zones de connexion électrique des extrémités ne débouchent pas dans des logements étanches.

Par le document JP-A-2001155702, on connaît un dispositif de batterie comprenant une enveloppe globalement de forme sensiblement parallélépipédique, présentant une hauteur, une largeur et une épaisseur, et un bloc batterie logé dans cette enveloppe et qui est composé d'une pluralité d'éléments de batterie avec des corps étanches allongés, préférentiellement de forme cylindrique, comportant deux extrémités opposées.

Les éléments de batterie sont, d'une part, disposés côte à côte et avec un espace interstitiel entre éléments voisins, d'autre part, arrangés en un bloc batterie constitué d'un seul tenant et, enfin, raccordés électriquement entre eux au niveau de chacune de leurs extrémités opposées selon un assemblage série/parallèle prédéterminé formant ainsi deux faces opposées de connexion électrique pour le bloc batterie.

De plus, ce dispositif de batterie connu comprend, au niveau de chacune des faces de connexion du bloc batterie, des moyens de compartimentage du volume interne du boitier définissant, par coopération avec une portion de paroi continue dudit boîtier, des logements étanches.

Enfin, dans ce dispositif de batterie connu, au moins les zones de connexion électrique des extrémités des éléments de batterie débouchent ou sont disposées dans ces logements étanches, lesquels renferment les moyens de raccordement électrique desdits éléments, et dans lesquels les extrémités des éléments viennent respectivement en engagement de support sur ou avec des portions d'extrémités opposées des corps des éléments de batterie avec les moyens de compartimentage opposés, les parties restantes des corps desdits éléments situées entre lesdits moyens de compartimentage opposés étant exposées directement à l'environnement extérieur à travers des portions de paroi ajourées ou discontinues du boîtier.

Toutefois, le dispositif de batterie connu de ce document JP est spécifiquement configuré pour être embarqué dans un véhicule, en étant inséré dans un logement correspondant.

De plus, la circulation d'air prévue autour des éléments n'est efficiente qu'en relation avec un système générant une circulation d'air forcée, c'est-à-dire mettant généralement en œuvre un organe actif devant être alimenté.

L'invention vise plus spécifiquement à surmonter ces limitations dans le contexte des batteries mentionnées en introduction.

A cet effet, l'invention propose d'améliorer un dispositif de batterie tel qu'évoqué précédemment, en prévoyant que le boîtier soit configuré et équipé pour permettre le portage et le transport dudit dispositif de batterie par un utilisateur, le boîtier, formant enveloppe par rapport à l'environnement extérieur est configuré et équipé de moyens pour permettre en utilisation le portage et le transport dudit dispositif de batterie par un utilisateur, à savoir un harnais et une poignée, et que ledit boîtier comporte deux portions de paroi continues et étanches qui forment deux parois latérales en regard s'étendant sensiblement dans des plans définis par la hauteur et la largeur et constituent les faces principales du parallélépipède formé sensiblement par le boîtier, les portions de paroi ajourées s'étendant périphériquement entre les deux portions de parois principales précitées, en les reliant mutuellement et en définissant en majeure partie l'épaisseur, ce sur au moins trois côtés périphériques dudit boîtier parallélépipédique, préférentiellement sur au moins les quatre côtés périphériques de ce boîtier, lesdites portions de paroi ajourées étant situées au niveau de surfaces extérieures normalement dégagées lors du portage du boîtier et en ce que les portions de paroi ajourées comportent des structures favorisant la circulation d'air traversante et formant simultanément barrière contre l'introduction de corps solides depuis l'extérieur dans le boîtier, telles que par exemple des fentes ou des ailettes à profil aérodynamique.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1 et 2 sont des vues en perspective selon deux directions différentes d'un dispositif de batterie portative selon un premier mode de réalisation de l'invention, ni le câble de branchement (à la charge à alimenter ou au chargeur), ni le harnais de portage (préférentiellement amovible) n'étant représentés ;
la figure 3 est une vue éclatée et en perspective du dispositif de batterie représenté figures 1 et 2 ;
la figure 4 est une section schématique dans un plan comprenant les plans médians d'une colonne d'éléments de batterie et perpendiculaire à la direction H du dispositif représenté sur les figures 1 et 2, les moyens de connexion électrique desdits éléments n'étant pas représentés ;
les figures 4A, 4B, 4C, et 4D sont des vues à une échelle différente des détails A, B, C et D respectivement, indiqués sur la figure 4 ;
la figure 5 est une section schématique dans un plan comprenant les plans médians d'une ligne d'éléments de batterie et perpendiculaire à la direction L du dispositif représenté sur les figures 1 et 2, les moyens de connexion électrique desdits éléments n'étant pas représentés ;
les figures 5A, 5B, 5C et 5D sont des vues à échelle différente des détails A', B', C' et D' respectivement, indiqués sur la figure 5 ;
les figures 6 et 7 sont des vues en perspective selon deux directions différentes, similaires aux vues des figures 1 et 2, d'un dispositif de batterie portative selon un second mode de réalisation de l'invention, représenté sans câble de branchement, ni harnais de portage ;
la figure 8 est une vue en perspective d'un bloc batterie (formé de trois sous-blocs superposés) faisant partie du dispositif représenté figures 6 et 7 et logé dans le boîtier de ce dernier ;
la figure 9 est une vue éclatée et en perspective du dispositif de batterie représenté figures 6 et 7 ;
la figure 10A est une vue schématique en élévation de la coupe partielle selon A-A de la figure 8', c'est-à-dire une coupe selon un plan comprenant les axes des éléments de batterie alignés de deux sous-blocs adjacents, les moyens de raccordement électrique des éléments n'étant pas représentés ;
la figure 10B est une vue en perspective de la coupe selon A-A de la figure 8, les moyens de raccordement électrique des éléments de batterie étant représentés ;
la figure 11 est une section schématique du dispositif de batterie représenté sur les figures 6 et 7 dans un plan médian d'un sous bloc de batterie, perpendiculairement à l'axe des éléments de batterie et à la direction H ;
la figure 12 est une section schématique du dispositif de batterie représenté sur les figures 6 et 7 dans un plan médian du dispositif de batterie, perpendiculaire à la direction L et comprenant les axes d'éléments de batterie des trois sous blocs successifs, et
la figure 13 est une représentation d'un dispositif de batterie selon l'invention équipé d'un harnais.

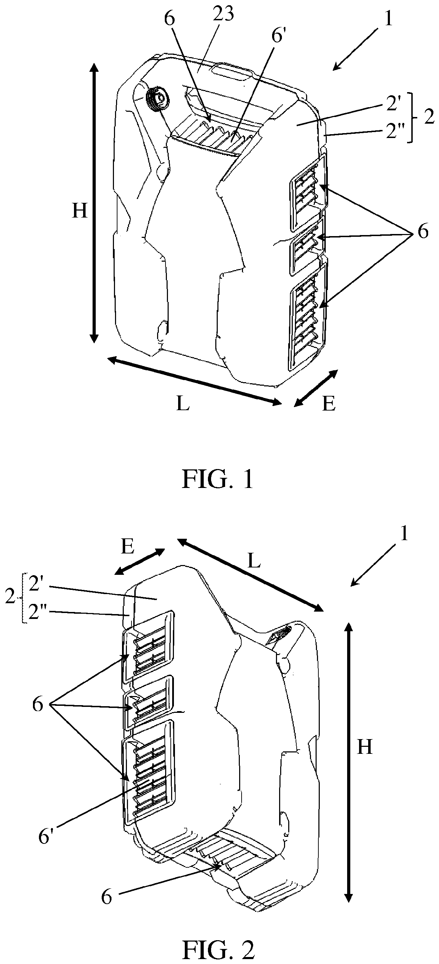

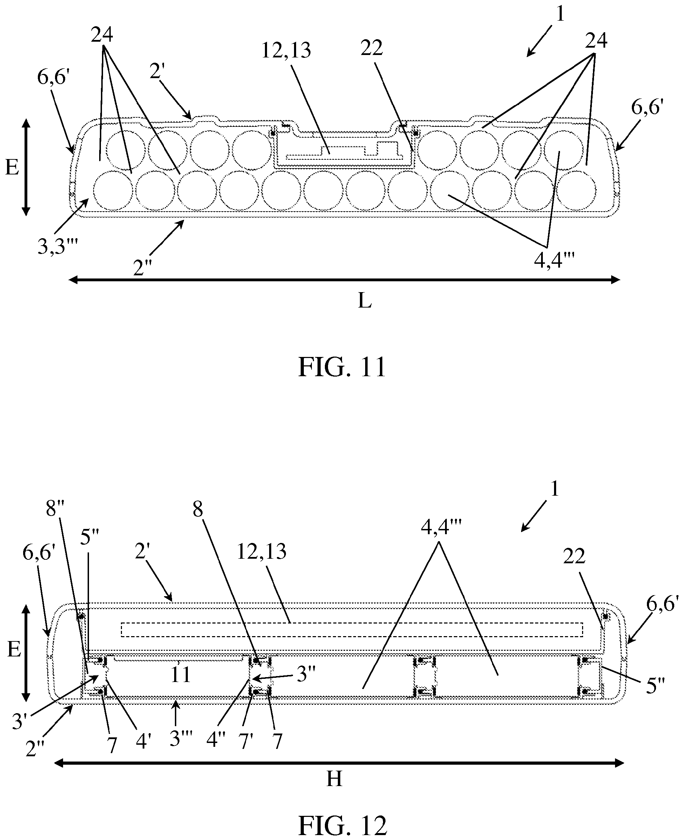

Les figures 1 à 7, 9, 11 et 12 montrent un dispositif de batterie portative 1 comprenant un boîtier 2 globalement de forme sensiblement parallélépipédique, présentant une hauteur H, une largeur L et une épaisseur E, et un bloc batterie 3 qui est logé dans ce boîtier 2,

Le bloc batterie 3 est composé d'une pluralité d'éléments de batterie 4 avec des corps 4'" étanches allongés, préférentiellement de forme cylindrique, comportant deux extrémités opposées 4' et 4". Les éléments de batterie 4 sont préférentiellement des accumulateurs de technologie Lithium-Ion dans un format cylindrique 18650. D'autres technologies d'accumulateurs et d'autres formats, y compris non cylindriques, peuvent bien entendu être utilisés dans le cadre de l'invention.

Ces éléments de batterie 4 sont, d'une part, disposés côte à côte et avec un espace interstitiel entre éléments de batterie 4 voisins, d'autre part, arrangés en un bloc batterie 3 constitué d'un seul tenant (en accord avec un premier mode de réalisation de l'invention) ou d'au moins deux sous-blocs 3'" (qui seront décrits plus loin en relation avec le second mode de réalisation de l'invention) mutuellement superposés ou accolés et, enfin, raccordés électriquement entre eux au niveau de chacune de leurs extrémités opposées 4' et 4" selon un assemblage série/parallèle prédéterminé formant ainsi deux faces opposées 3' et 3" de connexion électrique, pour le bloc batterie 3 d'un seul tenant ou pour chaque sous-bloc 3"'.

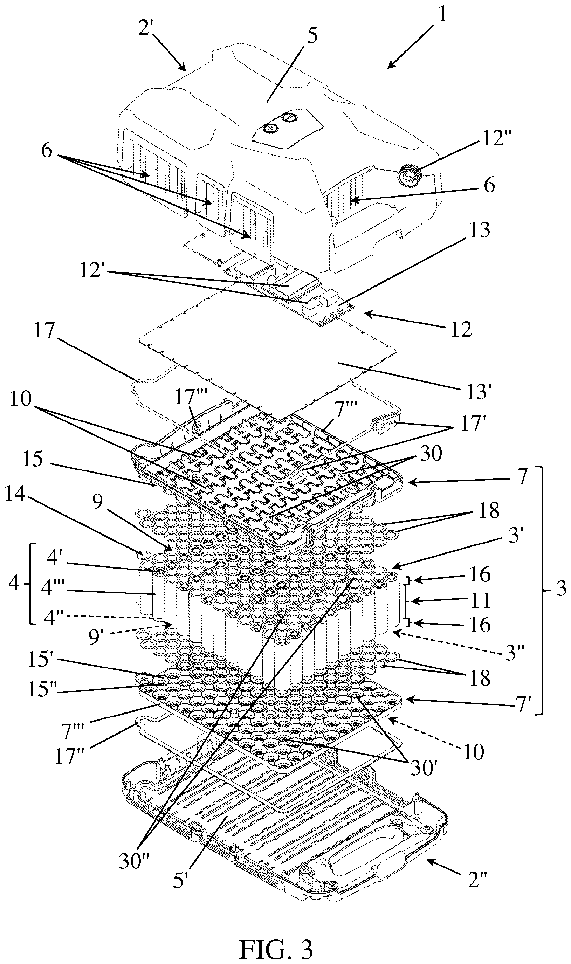

Dans le premier mode de réalisation pratique correspondant aux figures 3 à 5, le bloc batterie 3 comporte cent vingt éléments de batterie 4 disposés côte à côte selon une matrice régulière de dix lignes et de douze colonnes.

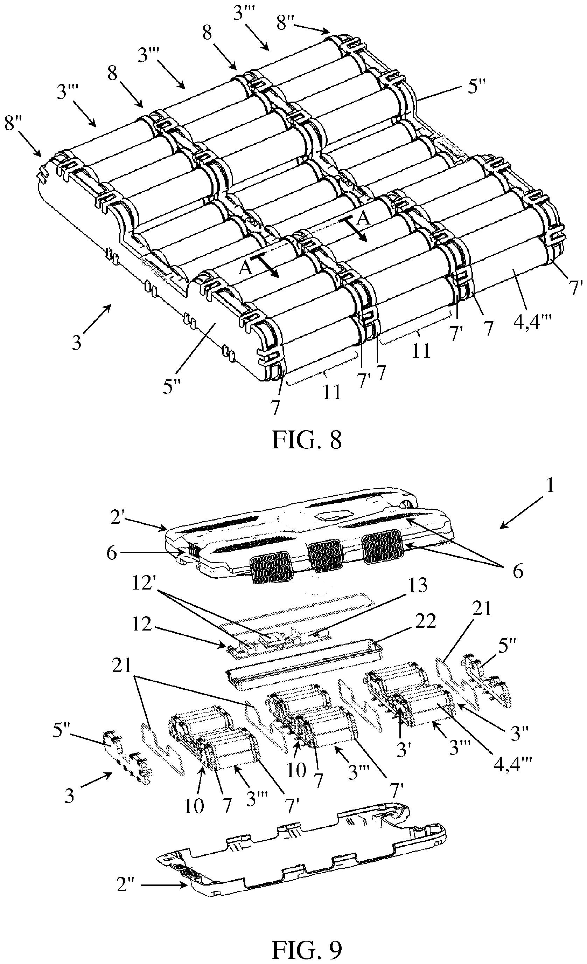

Dans le second mode de réalisation pratique correspondant aux figures 8, 9, 11 et 12, le bloc batterie 3 comporte trois sous-bloc 3'" comportant chacun vingt éléments de batterie 4 disposés côte à côte sur deux niveaux.

Ce dispositif de batterie 1 comprend, au niveau de chacune des faces de connexion 3', 3" du bloc batterie 3 d'un seul tenant ou de chaque sous-bloc 3''', des moyens surfaciques de compartimentage 7, 7' du volume interne du boitier 2 définissant, avec l'un parmi un moyen de compartimentage 7', 7, une portion de paroi continue 5, 5' dudit boîtier 2 et une paroi continue 5" distincte, des logements 8, 8', 8" étanches. Au moins les zones de connexion électrique 9, 9' des extrémités 4', 4" des éléments de batterie 4 débouchent ou sont disposées dans ces logements étanches 8, 8', 8" et ces logements étanches 8, 8', 8" renferment les moyens 10 de raccordement électrique desdits éléments de batterie 4.

Ces moyens 10 de raccordement électrique sont de préférence des moyens de raccordement sans soudure, tels que des languettes 10' de contact métalliques maintenues par une force de rappel élastique ou une force magnétique sur les zones de connexion 9, 9' des extrémités 4', 4" des éléments 4. Néanmoins, des contacts soudés peuvent aussi être envisagés.

En outre, les extrémités 4', 4" des éléments de batterie 4 viennent respectivement en engagement de support, par ou avec des portions d'extrémité 16 opposées des corps 4"', avec les moyens de compartimentage 7, 7' opposés et les parties 11 restantes des corps 4"' des éléments de batterie 4 situées entre lesdits moyens de compartimentage opposés 7, 7' sont exposées directement à l'environnement extérieur à travers des portions de paroi 6 ajourées ou discontinues du boîtier 2.

Conformément à l'invention, le boîtier 2 est configuré et équipé pour permettre le portage et le transport dudit dispositif de batterie 1 par un utilisateur et en ce que ledit boîtier 2 comporte deux portions de paroi 5, 5' continues et étanches qui forment deux parois latérales en regard s'étendant sensiblement dans des plans définis par la hauteur H et la largeur L et constituent les faces principales du parallélépipède formé sensiblement par le boîtier 2, les portions de paroi 6 ajourées s'étendant périphériquement entre les deux portions de parois principales 5 et 5' précitées, en les reliant mutuellement et en définissant en majeure partie l'épaisseur E, ce sur au moins trois côtés périphériques dudit boîtier 2 parallélépipédique, préférentiellement sur au moins les quatre côtés périphériques de ce boîtier 2.

Grâce à l'ensemble des dispositions constructives précitées, l'invention fournit un dispositif de batterie 1 dans lequel le corps 4'" de chaque élément de batterie 4 est exposé majoritairement, voire presque en totalité, à l'air extérieur, favorisant un échange thermique optimal avec ce dernier, alors même que des raccordements électriques sont réalisés aux deux extrémités opposées 4' et 4" des éléments de batterie 4, en étant disposés dans des logements 8, 8' et 8" isolés et étanches. Cette étanchéité des logements 8, 8', 8" est configurée pour autoriser, d'une part, l'équilibre des pressions des logements 8, 8', 8" avec la pression atmosphérique extérieure au boitier 2 et, d'autre part, l'évacuation vers l'extérieur d'une éventuelle humidité interne pour éviter une condensation de celle-ci. Une telle étanchéité par compartimentage interne et avec échange contrôlé avec l'extérieur permet d'accroître la durée de vie du dispositif de batterie 1 en limitant considérablement les corrosions au niveau des raccordements électriques ainsi que les risques de courts-circuits dans ces mêmes raccordements, tout en autorisant un usage dudit dispositif de batterie 1 en extérieur, y compris par temps de pluie. Les moyens de compartimentage 7, 7' peuvent comporter à cet effet, préférentiellement chacun, au moins une petite ouverture 17"' recouverte par exemple d'une membrane textile hydrophobe ou imperméable aux liquides.

En prévoyant des portions de paroi 6' ajourées sur au moins les quatre petits côtés périphériques du parallélépipède formé par le boîtier 2, conformément à l'invention, il est possible d'optimiser la circulation d'air dans le volume interne 24 et entre les éléments de batterie 4 en fournissant des possibilités de passage à l'air, en entrée et en sortie, qui sont réparties circonférentiellement par rapport au boîtier 2 et situées au niveau de surfaces extérieures normalement dégagées lors du portage du boîtier 2 (également bon rapport : efficacité de refroidissement / aire des zones ajourées).

Les ouvertures (préférentiellement en forme de fentes) des portions de parois 6' ajourées latérales périphériques sont directement en contact avec l'air ambiant et favorisent une circulation d'air par effet de convection autour et entre les parties exposées 11 des éléments 4, sans mise en œuvre d'un quelconque système actif de circulation forcée. Ainsi, la chaleur également est de fait évacuée dans l'air ambiant par ces mêmes ouvertures (une partie des ouvertures capte l'air ambiant et le fait entrer dans le volume interne 24, alors que l'autre partie des ouvertures le rejette sous forme d'air plus chaud).

Les moyens de compartimentage 7 et 7' en assurant simultanément une fonction de support et de maintien des éléments de batterie 4 et une fonction d'étanchéisation au niveau de leurs extrémités 4', 4", permet de limiter le poids du dispositif de batterie 1.

De plus, l'invention utilise avantageusement, en complément de la rigidité fournie par l'arrangement structurel et mécaniquement résistant formé par les plaques 7, 7' et les parties 2', 2", la rigidité cumulée des corps 4'" des éléments 4 orientés tous, dans un bloc unique ou par sous-blocs 3"', dans la même direction dans un arrangement parallèle. La prévision d'un élément constructif de rigidification dans cette direction, au moins sur l'extension des parties 11 des corps 4'" est donc réduite, voire superflue (structure plus simple, poids moins élevé). La figure 3 montre aussi un exemple de moyens d'assemblage mécanique du bloc batterie 3 au niveau des moyens de compartimentage 7 et 7' par l'utilisation de bossages 30, 30' intégrés dans les moyens de compartimentage et recevant des colonnettes 30" assemblées avec eux par des vis, non représentées, ces colonnettes 30" étant réparties dans le bloc batterie 3 parmi les éléments 4 et formant écarteurs rigides entre les moyens 7, 7'. Une étanchéité peut être prévue au niveau des bossages 30, 30' de façon à éviter une éventuelle migration d'humidité dans les logements 8, 8' et 8" par ces moyens d'assemblage mécanique. L'utilisation de ces moyens d'assemblage 30, 30', 30" facilite la manipulation du bloc de batterie 3 lorsqu'il est monté, pour sa manutention ou son contrôle, avant l'assemblage final du dispositif de batterie 1. Les éléments de batterie 4 peuvent bien entendu être montés dans le même sens ou de manière alternativement inversée, de façon à établir les caractéristiques de tension et de capacité du dispositif de batterie 1 par une configuration appropriée des connexions série/parallèle des éléments de batterie 4 et des moyens de raccordement électrique mutuel 10.

Avantageusement, les moyens de compartimentage 7, 7' comprennent des reliefs 15 ou des renfoncements 15' et des découpes 15" formant un motif de sites de réception qui détermine l'arrangement espacé des éléments de batterie 4 et qui contribue à leur maintien latéral et à leur calage longitudinal, en venant en engagement de support avec les portions d'extrémité 16 de ces éléments de batterie 4.

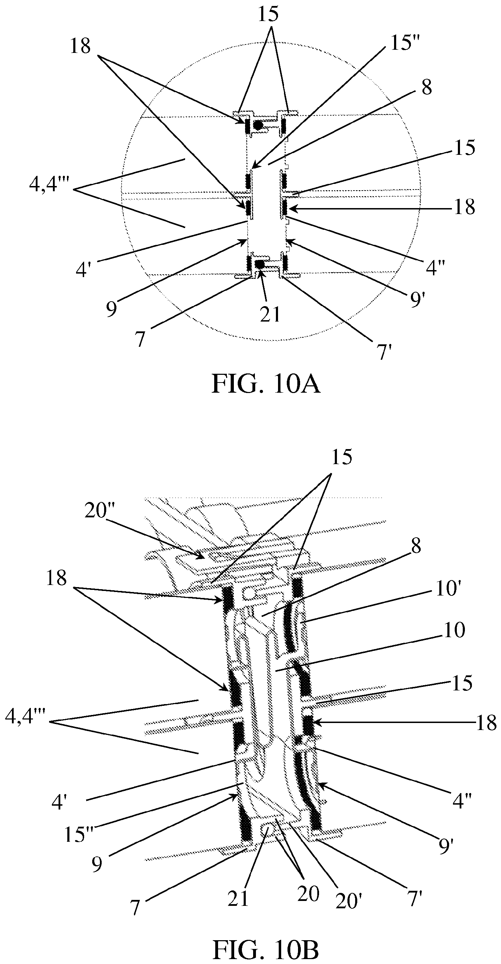

En accord avec une variante constructive simple et privilégiée de l'invention, ressortant des figures 3, 4, 5, 9, 10A, 10B et 12 notamment, les moyens de compartimentage 7, 7' consistent chacun en une plaque ajourée, présentant des découpes 15" coïncidant avec les extrémités 4', 4" des différents éléments de batterie 4 et définissant chacune un passage d'accès entre l'intérieur du logement 8, 8', 8" attenant et la zone de connexion électrique 9, 9' au moins des extrémités 4', 4" correspondantes des éléments de batterie 4, ces découpes 15" étant avantageusement situées au fond de renfoncements 15' de la plaque 7, 7' considérée ou entourées de reliefs annulaires 15 recevant les portions d'extrémité 16 des corps 4"' des éléments de batterie 4.

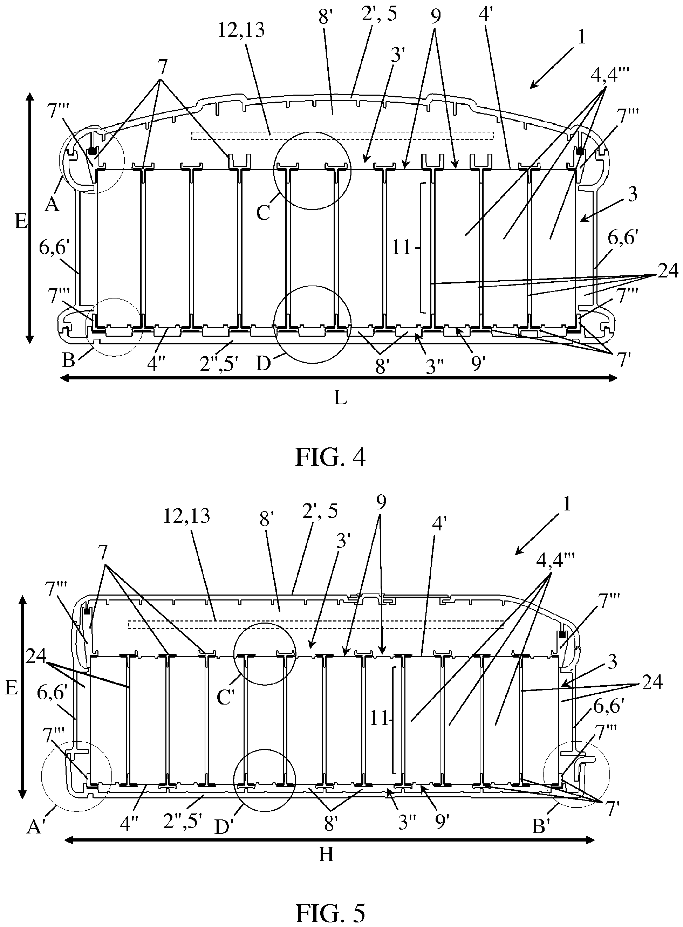

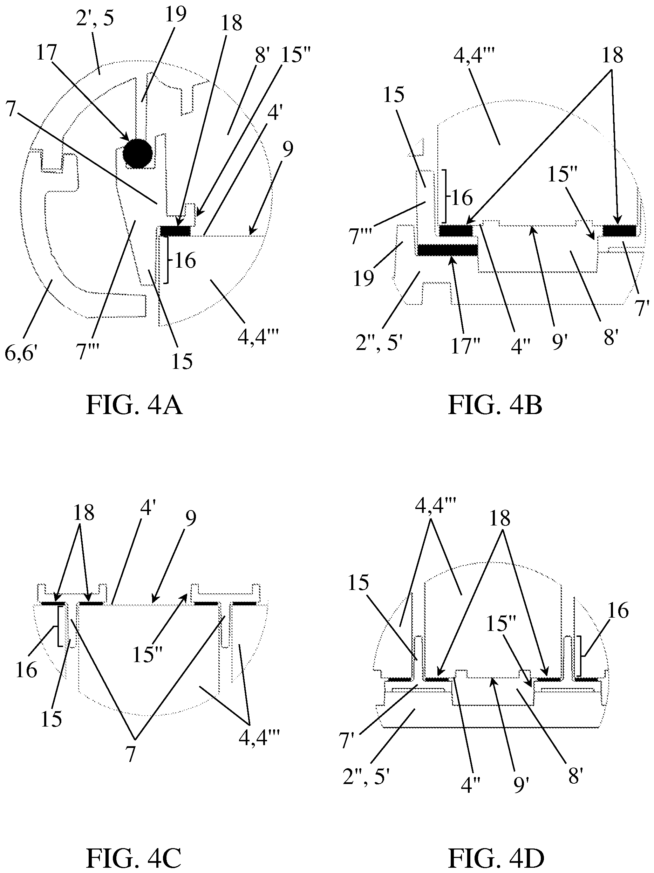

Préférentiellement, et comme le montrent les figures 4, 5, 10A, 10B et 12, les zones de connexion 9, 9' sont, par rapport aux volumes intérieurs des logements étanches 8, 8', 8" situés en retrait ou au plus de manière affleurante dans les découpes 15".

Selon une première alternative constructive, il peut être prévu que les plaques ajourées 7, 7' formant moyens de compartimentage s'étendent chacune d'un seul tenant et à distance par-dessus les extrémités 4', 4" des corps cylindriques 4"' des éléments de batterie 4.

Selon une deuxième alternative constructive, il peut être prévu que les plaques ajourées 7, 7', préférentiellement chacune d'un seul tenant et formant moyens de compartimentage, soient emboitées sur les extrémités 4' et 4" opposées des corps cylindriques 4'" des éléments de batterie 4 au niveau de leurs portions d'extrémité 16.

De plus, ces plaques ajourées 7, 7', qui reçoivent les extrémités opposées 4', 4" des éléments de batterie 4 pour les supporter et les maintenir rigidement en position dans le boîtier 2 et pour isoler de manière étanche ces extrémités 4', 4" par rapport au volume interne 24 du boîtier 2 en communication avec l'environnement extérieur, sont montées de manière calée dans les parties constitutives 2', 2" du boîtier 2 rigide, protecteur et porteur, enveloppant en totalité le bloc batterie 3. Les parties 2' et 2" se présentent avantageusement sous la forme de deux demi-coques creuses complémentaires.

Conformément à une caractéristique de l'invention, chaque plaque ajourée 7, 7' comporte un bord périphérique 7''', 20, 20' coopérant par engagement mécanique soit avec un bord périphérique 20', 20 d'une autre plaque ajourée 7', 7 disposée en regard, soit avec une formation interne 19 de l'une des portions de paroi continues 5, 5', 5", ce avec interposition d'un moyen d'étanchéité 17, 17", 21 adapté et en réalisant un montage calé entre les deux composantes 7, 7', 5, 5' qui coopèrent.

Avantageusement, et comme le montrent par exemple les figures 3 à 5, l'un 8' au moins des logements étanches 8, 8', 8" éventuellement de plus grand volume, renferme des moyens 12 de connexion électrique du bloc batterie 3 à un connecteur 12" monté dans le boîtier 2 et permettant un raccordement à un ou des dispositif(s) extérieur(s) de chargement ou de déchargement, ainsi qu'éventuellement des moyens électroniques 12' de gestion et de contrôle du bloc batterie 3, le cas échéant regroupés sur une carte 13 au moins. Une plaque d'isolation 13', montrée en figure 3, constituée par exemple d'une mince couche isolante rigide en matière plastique, permet une isolation électrique entre les moyens de connexion électrique 12 et les moyens de raccordement électrique 10 des éléments 4. Les câbles électriques reliant le connecteur 12" aux moyens de connexion électrique 12 peuvent traverser le logement étanche 8' par l'intermédiaire de presse étoupes 17' associés par exemple aux moyens de compartimentage 7.

Dans le mode de réalisation des figures 9, 11 et 12, l'un au moins des logements étanches 8, 8" est relié à un compartiment additionnel 22 renfermant de façon étanche les moyens 12 de connexion électrique du bloc batterie 3.

Pour relier de manière interne les régions polaires reprenant les connexions issues de faces opposées 3' et 3", c'est-à-dire sans nécessiter de moyen de raccordement extérieur, il peut être avantageusement prévu, comme le montre par exemple la figure 3, que le bloc-batterie 3 d'un seul tenant ou chaque sous-bloc 3'" intègre, en lieu et place d'un élément de batterie 4 dans l'arrangement d'éléments de batterie 4, un conduit 14 de mêmes dimensions qu'un tel élément de batterie 4 et monté de manière rigide et étanche, à l'instar des éléments de batterie 4 entre les deux moyens de compartimentage 7 et 7' en forme de plaques, permettant le passage de lignes de liaison électrique entre les logements étanches 8, 8', 8".

Ce conduit de liaison 14, formant un élément de batterie 4 factice, est réalisé de manière à coopérer avec les moyens d'étanchéité 18 des éléments de batterie 4.

Outre le fait de procurer un passage étanche et protégé aux lignes de liaison électrique dans l'espace interne de la batterie exposé à l'environnement extérieur, le conduit 14, du fait de sa forme, de ses dimensions et de sa disposition, ne perturbe pas l'arrangement des éléments de batterie 4, ni la circulation d'air entre ces derniers. Ce conduit 14 peut, en outre, servir d'entretoise entre les deux plaques 7 et 7'.

Comme cela ressort par exemple des figures 1, 2, 6 et 7, le boîtier 2 comprend deux portions de paroi 5, 5' continues et étanches, mutuellement opposées et reliées entre elles par des portions de paroi 6 au moins partiellement ajourées ou discontinues, chaque portion de paroi 5, 5' appartenant à une partie constitutive 2', 2" du boîtier 2 et les portions de paroi 6 ajourées étant avantageusement montées avec venue en prise par emboîtement entre les deux parties constitutives 2', 2" ou étant intégrées à ces dernières.

L'une 2' des parties 2', 2" peut présenter une forme de coque, partiellement bombée, pour constituer le logement 8' de plus grand volume et l'autre 2" une forme plus plate.

Afin de garantir un refroidissement efficace, sans mise en œuvre de moyen de circulation actif, les portions de paroi ajourées 6 comportent des structures 6' favorisant la circulation d'air traversante et formant simultanément barrière contre l'introduction de corps solides (comme par exemple des feuilles ou des graviers) depuis l'extérieur dans le boîtier 2, telles que par exemples des fentes ou des ailettes à profil aérodynamique, éventuellement montées dans des bouches d'aération ménagées dans lesdites portions de paroi 6. Ces dernières peuvent avantageusement présenter des structures en forme d'ouïes avec des lames 6' inclinées à la manière d'abat-sons. La résistance à la circulation de l'air au travers du boitier 2 est ainsi réduite, et l'échauffement des éléments de batterie 4 accentue par effet de convection cette circulation d'air, accélérant de fait le refroidissement des éléments de batterie 4.

La localisation des portions de paroi ajourées 6 sur le boîtier 2 est déterminée de telle façon que la circulation d'air par convexion naturelle entre les éléments de batterie 4 dans le volume interne délimité par les deux paroi de compartimentage 7 et 7' est favorisé, notamment en position normale de chargement ou d'utilisation (portage) du dispositif 1.

Les parties constitutives 2' et 2" du boîtier (assemblées par exemple par vissage, par collage ou par enclenchement élastique ou par crans), ainsi que les parois de compartimentage 7 et 7' sont préférentiellement réalisées par moulage ou thermoformage en une matière thermoplastique.

Conformément à un premier mode de réalisation, illustré aux figures 1 à 5, il est avantageusement prévu que, lorsque le bloc batterie 3 est d'un seul tenant ou monobloc, les éléments de batterie 4 soient disposés longitudinalement selon la direction de l'épaisseur E et perpendiculairement aux deux faces principales du parallélépipède rectangle formé par le boîtier 2.

Dans ce premier mode de réalisation, le dispositif de batterie 1 peut comporter, d'une part, des moyens d'étanchéité périphérique continue 17, 17" entre les moyens de compartimentage 7, 7' et les portions de paroi continues 5, 5' du boîtier 2 et, d'autre part, des moyens d'étanchéité individuels 18 entre les extrémités 4', 4" de chacun des éléments de batterie 4 et les moyens de compartimentage 7, 7', soit au niveau des extrémités 4', 4" des corps cylindriques 4'" des éléments de batterie 4, soit au niveau de la face latérale de portions d'extrémité 16 desdits corps cylindriques, en retrait par rapport auxdites extrémités 4', 4".

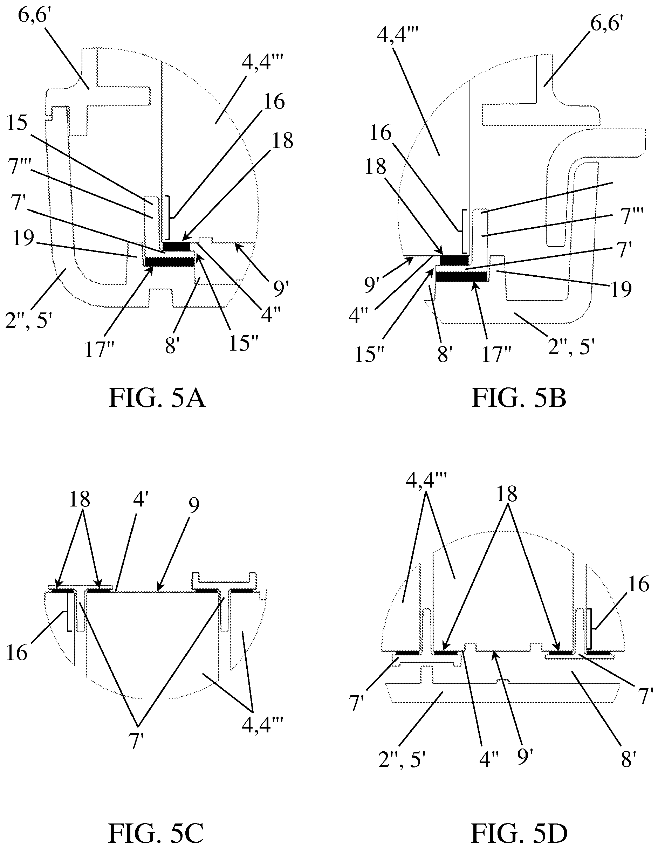

Comme le montrent les figures 4A à 4D, et 5A à 5D, l'invention peut proposer par exemple que les moyens de compartimentage 7, 7' consistent en des plaques pourvues de découpes 15", entourées chacune d'un relief annulaire 15 recevant la portion d'extrémité 16 d'un élément de batterie 4, et qu'un moyen d'étanchéité circonférentielle 18 entre la plaque ajourée concernée 7, 7' et l'extrémité 4', 4" de l'élément de batterie 4 concerné soit présent au niveau de chaque découpe 15", lesdites plaques 7, 7' reposant contre et/ou sur lesdites portions d'extrémité 16, avec interposition desdits moyens d'étanchéité 18.

Les moyens d'étanchéité 18 peuvent par exemple consister en des rondelles souples, comme représenté, en des joints toriques ou en des lèvres associées à des chicanes.

Les moyens d'étanchéité 18 sont préférentiellement réalisées dans une matière isolante et souple comme un plastique polyéthylène expansé en cellules fermées, pour d'une part assurer l'étanchéité entre les portions d'extrémité 16 des éléments de batterie 4 et les moyens de compartimentage 7, 7' et d'autre part compenser les tolérances dimensionnelles de fabrication des éléments 4, différentes entre les lots de fabrication ou d'un fabricant d'éléments de batterie à l'autre, lorsque la batterie est assemblée. Ces moyens permettent en outre d'amortir au niveau des éléments 4 d'éventuels chocs que le dispositif de batterie 1 sera amené à connaitre au cours de son cycle de vie et de ses utilisations. Ils peuvent aussi être constitués d'un ruban de colle souple. Il est aussi possible que les moyens d'étanchéité 18 soient recouverts de ruban adhésif double face pour adhérer d'une part sur une surface d'un des moyens de compartimentage 7, 7', et d'autre part sur les portions d'extrémités 16 des éléments de batterie 4. Ainsi assemblé, le bloc batterie 3 n'a le cas échéant pas besoin de moyens d'assemblage mécanique complémentaire, réduisant ainsi le poids du bloc batterie 3.

La souplesse des moyens d'étanchéité 18 permet également de conserver une étanchéité suffisante en cas de dilatation thermique liée à une utilisation intense de la batterie sur une durée importante et/ou à des conditions de température ambiante extrêmes.

En vue de la création des logements étanches 8, 8' et 8", il peut être prévu que chaque moyen de compartimentage 7, 7' sous forme de plaque ajourée soit reçu par engagement coopérant et calé de son bord périphérique 7''', et avec interposition d'un moyen d'étanchéité 17, 17" dans, contre ou sur une formation interne continue 19 de la portion de paroi 5, 5' continue ou étanche correspondante du boîtier 2, cette formation consistant par exemple en un épaulement, un rebord, une aile, une nervure, une rainure ou analogue.

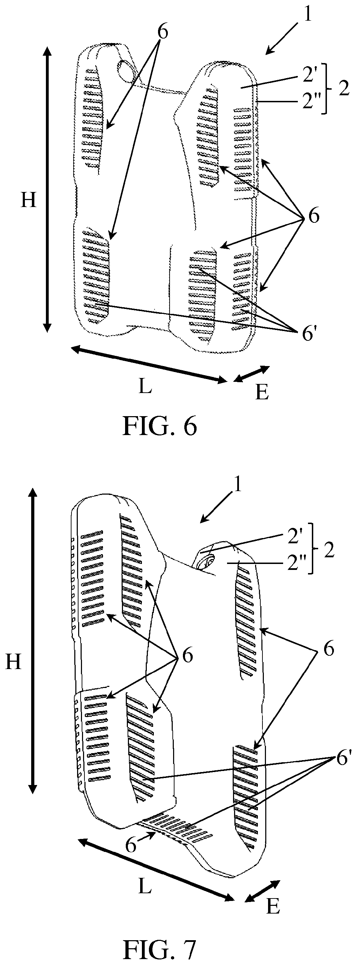

Conformément à un second mode de réalisation, et comme illustré sur les figures 6 à 12, lorsque le bloc-batterie 3 est constitué par l'association mécanique et électrique d'au moins deux sous-blocs 3"', chaque sous-bloc 3'" comprend au moins une rangée, préférentiellement au moins deux rangées arrangées en couches parallèles d'éléments de batterie 4, tous orientés longitudinalement dans le sens de la hauteur H ou de la largeur L du parallélépipède rectangle formé sensiblement par le boîtier 2 et disposés parallèlement aux faces principales de ce dernier, lesdits sous-blocs 3'" étant soit superposés comme des étages d'éléments de batterie 4 dans le sens de la hauteur H, soit accolés entre eux latéralement dans le sens de la largeur L, avec préférentiellement constitution et interposition d'un logement étanche 8 intermédiaire entre deux sous-blocs 3'" adjacents, un logement étanche extrêmal 8" étant avantageusement présent à chacune des extrémités opposées du bloc batterie 3.

Les figures précitées montrent en outre que chaque logement étanche intermédiaire 8 est constitué par deux moyens de compartimentage 7 et 7' en forme de plaques munies de bords 20, 20' périphériques coïncidents et mutuellement coopérants par assemblage étanche, à la manière de deux coques complémentaires, le bloc batterie 3 comportant au moins un logement étanche interstitiel 8 situé entre deux sous-blocs 3'" et deux logements extrêmaux 8" situés au niveau des deux extrémités longitudinales opposées du bloc batterie 3.

Chaque logement extrêmal 8" est par exemple formé par coopération d'un moyen de compartimentage 7, 7' monté sur les éléments 4 du sous-bloc 3" d'extrémité avec une paroi continue 5".

Préférentiellement, le bord 20 de l'une 7 des deux plaques de compartimentage 7, 7' de chaque logement étanche 8 intermédiaire présente une structure en rainure ou gorge et le bord 20' de l'autre 7' des deux plaques de compartimentage présente une structure avec au moins une nervure ou aile, apte et destinée à s'emboîter dans ladite rainure ou gorge, de manière à créer une chicane entre les deux bords 20 et 20' assemblés, un joint d'étanchéité 21 étant présent dans ladite rainure 20 ou sur ladite nervure 20'.

De manière avantageuse, l'assemblage par emboitement au niveau des bords 20, 20' des deux plaques de compartimentage 7 et 7' est verrouillé par encliquetage élastique de moyens complémentaires 20" coopérants, du type cran / encoche.

Dans le mode de réalisation représenté sur les figures 6 à 12, le dispositif de batterie 1, et plus précisément le bloc-batterie 3 formé de plusieurs sous-blocs 3"', comprend, d'une part, des logements étanches 8 interstitiels ou intermédiaires, situés entre deux sous-blocs 3"' d'éléments de batterie 4 superposés ou adjacents et logeant les moyens d'interconnexion 10 des zones de connexion électrique 9, 9' accessibles des éléments de batterie 4 des deux sous-bloc 3'" concernés et, d'autre part, des logements étanches 8" extrêmaux ou d'extrémité, situés au niveau du bord inférieur ou supérieur ou d'un bord latéral d'un arrangement de sous-blocs 3"' superposés ou accolés, et dont l'une des plaques parmi 7 et 7' de compartimentage externe est dépourvue de découpe 15" et constitue une paroi continue 5".

Dans le cadre du second mode de réalisation et compte tenu de l'arrangement des éléments de batterie 4 dans le boîtier 2, les portions de paroi ajourées 6 peuvent également s'étendre, en plus des quatre côtés latéraux (petits côtés du parallélépipède) du boîtier 2, au niveau des faces principales de ce dernier (définies par les dimensions H et L), c'est-à-dire sur les portions de paroi principales 5 et/ou 5', qui demeurent néanmoins en majorité continues, notamment au niveau de leurs régions centrales respectives (voir figures 6 et 7).

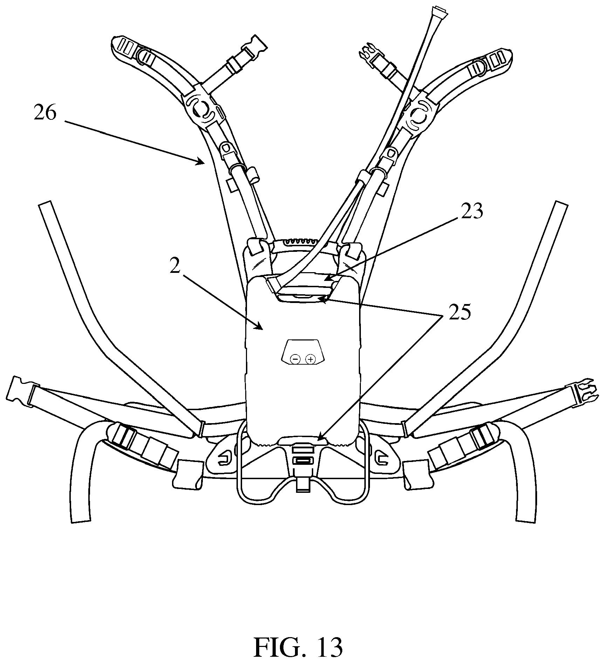

Comme indiqué précédemment et en vue du portage en utilisation du dispositif de batterie 1, ce dernier comprend également un harnais rigide 26 rapporté par accrochage avec verrouillage libérable sur le boîtier 2, au niveau de sites 25 d'accrochage de ce dernier (figure 13).

Préférentiellement les éléments de batterie 4 sont du type lithium-ion ou lithium polymère et le boîtier 2 et les moyens de compartimentage 7, 7' sont réalisés en un matériau thermoplastique, au moins la couche de matériau extérieur des éléments de batterie 4 étant d'un type résistant aux agressions du milieu environnant.

Une poignée de transport 23 (cf. figure 1) est intégrée à l'une des deux parties 2', 2" du boîtier 2, ou est constituée par l'assemblage des deux parties 2', 2" (les parties 2', 2" intégrant des portions mutuellement complémentaires de cette poignée).

L'invention concerne également, bien que non représenté, un ensemble d'outil électroportatif de puissance comprenant au moins deux composantes reliées par un câble, à savoir un outil intégrant au moins un actionneur et une alimentation autonome de puissance sous la forme d'un dispositif de batterie. Cet ensemble est caractérisé en ce que le dispositif de batterie est un dispositif de batterie 1 tel que décrit précédemment.

Cet ensemble peut aussi comprendre un chargeur, pouvant également être raccordé au dispositif de batterie 1, alternativement avec l'outil.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de batterie portative (1) comprenant un boîtier (2) globalement de forme sensiblement parallélépipédique, présentant une hauteur (H), une largeur (L) et une épaisseur (E), et un bloc batterie (3) logé dans ce dernier,
le bloc batterie (3) étant composé d'une pluralité d'éléments de batterie (4) avec des corps (4"') étanches allongés, préférentiellement de forme cylindrique, comportant deux extrémités opposées (4' et 4"),
les éléments de batterie (4) étant, d'une part, disposés côte à côte et avec un espace interstitiel entre éléments (4) voisins, d'autre part, arrangés en un bloc batterie (3) constitué d'un seul tenant ou d'au moins deux sous-blocs (3"') mutuellement superposés ou accolés et, enfin, raccordés électriquement entre eux au niveau de chacune de leurs extrémités opposées (4', 4") selon un assemblage série/parallèle prédéterminé formant ainsi deux faces opposées (3', 3") de connexion électrique, pour le bloc batterie (3) d'un seul tenant ou pour chaque sous-bloc (3"'),
ce dispositif de batterie (1) comprenant, au niveau de chacune des faces de connexion (3, 3') du bloc batterie (3) d'un seul tenant ou de chaque sous-bloc (3"'), des moyens surfaciques de compartimentage (7, 7') du volume interne du boitier (2) définissant, par coopération avec l'un parmi : i) une portion de paroi continue (5, 5') dudit boîtier (2), ii) un autre moyen de compartimentage (7', 7,) et iii) une paroi continue (5") distincte, des logements (8, 8', 8") étanches,
dispositif de batterie (1) dans lequel au moins les zones de connexion électrique (9, 9') des extrémités (4', 4") des éléments de batterie (4) débouchent ou sont disposées dans ces logements étanches (8, 8', 8"), lesquels renferment les moyens (10) de raccordement électrique desdits éléments (4), et dans lesquels les extrémités (4', 4") des éléments (4) viennent respectivement en engagement de support sur ou avec des portions d'extrémités (16) opposées des corps (4"') des éléments de batterie (4) avec les moyens de compartimentage (7, 7') opposés, les parties (11) restantes des corps (4"') desdits éléments (4) situées entre lesdits moyens de compartimentage opposés (7, 7') étant exposées directement à l'environnement extérieur à travers des portions de paroi (6) ajourées ou discontinues du boîtier (2),
dispositif (1) **caractérisé en ce que** le boîtier (2), formant enveloppe par rapport à l'environnement extérieur, est configuré et équipé de moyens pour permettre en utilisation le portage et le transport dudit dispositif de batterie (1) par un utilisateur, à savoir un harnais (26) et une poignée (23), **en ce que** ledit boîtier (2) comporte deux portions de paroi (5, 5') continues et étanches qui forment deux parois latérales en regard s'étendant sensiblement dans des plans définis par la hauteur (H) et la largeur (L) et constituent les faces principales du parallélépipède formé sensiblement par le boîtier (2), **en ce que** les portions de paroi (6) ajourées s'étendent périphériquement entre les deux portions de parois principales (5 et 5') précitées, en les reliant mutuellement et en définissant en majeure partie l'épaisseur (E), ce sur au moins trois côtés périphériques dudit boîtier (2) parallélépipédique, préférentiellement sur au moins les quatre côtés périphériques de ce boîtier (2), lesdites portions de paroi (6) ajourées étant situées au niveau de surfaces extérieures normalement dégagées lors du portage du boîtier (2) et **en ce que** les portions de paroi (6) ajourées comportent des structures (6') favorisant la circulation d'air traversante et formant simultanément barrière contre l'introduction de corps solides depuis l'extérieur dans le boîtier (2), telles que par exemple des fentes ou des ailettes à profil aérodynamique.

2. Dispositif de batterie selon la revendication 1, **caractérisé en ce que** les moyens de compartimentage (7, 7') comprennent des reliefs ou des renfoncements (15') (15) et des découpes (15") formant un motif de sites de réception qui détermine l'arrangement espacé des éléments (4) et qui assure leur maintien latéral et leur calage longitudinal, en venant en engagement avec des portions d'extrémité (16) au moins de ces éléments (4).

3. Dispositif de batterie selon l'une quelconque des revendications 1 et 2, **caractérisé en ce que** les moyens de compartimentage (7, 7') consistent chacun en une plaque ajourée, présentant des découpes (15') coïncidant avec les extrémités (4', 4") des différents éléments de batterie (4) et définissant chacune un passage d'accès entre l'intérieur du logement (8, 8', 8") attenant et la zone de connexion électrique (9, 9') au moins des extrémités (4', 4") correspondantes des éléments de batterie (4), ces découpes (15") étant avantageusement situées au fond de renfoncements (15') de la plaque (7, 7') considérée ou entourées de reliefs annulaires (15') recevant les portions d'extrémité (16) des corps (4"') des éléments de batterie (4).

4. Dispositif de batterie selon la revendication 3 , **caractérisé en ce que** les plaques ajourées (7, 7') formant moyens de compartimentage s'étendent chacune d'un seul tenant et à distance par-dessus les extrémités (4', 4") des corps cylindriques (4"') des éléments de batterie (4), et **en ce que** ces plaques ajourées (7, 7'), qui reçoivent les extrémités opposées (4', 4") des éléments de batterie (4) pour les supporter et les maintenir rigidement en position dans le boîtier (2) et pour isoler de manière étanche ces extrémités (4', 4") par rapport au volume interne (24) du boîtier (2) en communication avec l'environnement extérieur, sont montées de manière calée dans les parties constitutives (2', 2") du boîtier (2) rigide, protecteur et porteur, enveloppant en totalité le bloc batterie (3).

5. Dispositif de batterie selon la revendication 3, **caractérisé en ce que** les plaques ajourées (7, 7') formant moyens de compartimentage sont emboitées sur les extrémités (4' et 4") opposées des corps cylindriques (4") des éléments (4) au niveau de leurs portions d'extrémité (16), et **en ce que** ces plaques ajourées (7, 7'), qui reçoivent les extrémités opposées (4', 4") des éléments de batterie (4) pour les supporter et les maintenir rigidement en position dans le boîtier (2) et pour isoler de manière étanche ces extrémités (4', 4") par rapport au volume interne (24) du boîtier (2) en communication avec l'environnement extérieur, sont montées de manière calée dans les parties constitutives (2', 2") du boîtier (2) rigide, protecteur et porteur, enveloppant en totalité le bloc batterie (3).

6. Dispositif de batterie selon l'une quelconque des revendications 3 à 5, **caractérisé en ce que** chaque plaque ajourée (7, 7') comporte un bord périphérique (7"' ; 20, 20') coopérant par engagement mécanique soit avec un bord périphérique (20', 20) d'une autre plaque ajourée (7', 7) disposée en regard, soit avec une formation interne (19) de l'une des portions de paroi continues (5, 5' ; 5"), ce avec interposition d'un moyen d'étanchéité (17, 17" ; 21) adapté et en réalisant un montage calé entre les deux composantes (7, 7', 5, 5', 5") qui coopèrent.

7. Dispositif de batterie selon l'une quelconque des revendications 1 à 6, **caractérisé en ce que** l'un (8) au moins des logements étanches (8, 8', 8"), éventuellement celui de plus grand volume, renferme des moyens (12) de connexion électrique du bloc batterie (3) à un connecteur (12") monté dans le boîtier (2) et permettant un raccordement à un ou des dispositif(s) extérieur(s) de chargement ou de déchargement, ainsi qu'éventuellement des moyens électroniques (12) de gestion et de contrôle du bloc batterie (3), le cas échéant regroupés sur une carte (13) au moins.

8. Dispositif de batterie selon l'une quelconque des revendications 1 à 7, **caractérisé en ce que** le bloc-batterie (3) d'un seul tenant ou chaque sous-bloc (3"') intègre, en lieu et place d'un élément de batterie (4) dans l'arrangement d'éléments de batterie (4), un conduit (14) de mêmes dimensions qu'un tel élément de batterie (4) et monté de manière rigide et étanche, à l'instar des éléments de batterie (4) entre les deux moyens de compartimentage (7 et 7') en forme de plaques, permettant le passage de lignes de liaison électrique entre les logements étanches (8, 8', 8").

9. Dispositif de batterie selon l'une quelconque des revendications 1 à 8, **caractérisé en ce que** les deux portions de paroi (5, 5') continues et étanches, mutuellement opposées et reliées entre elles par les portions de paroi (6) au moins partiellement ajourées ou discontinues, appartiennent chacune à une partie constitutive (2', 2") du boîtier (2) et les portions de paroi (6) ajourées sont avantageusement montées avec venue en prise par emboîtement entre les deux parties constitutives (2', 2") ou intégrées à ces dernières.

10. Dispositif de batterie selon la revendication 1, **caractérisé en ce que** les fentes ou ailettes à profil aérodynamique sont montées dans des bouches d'aération ménagées dans les portions de paroi (6) ajourées.

11. Dispositif de batterie selon l'une quelconque des revendications 1 à 10, **caractérisé en ce que**, lorsque le bloc batterie (3) est d'un seul tenant ou monobloc, les éléments de batterie (4) sont disposés longitudinalement selon la direction de l'épaisseur (E) et perpendiculairement aux deux faces principales du parallélépipède rectangle formé par le boîtier (2).

12. Dispositif de batterie selon la revendication 11 , **caractérisé en ce qu'**il comporte, d'une part, des moyens d'étanchéité périphérique continue (17, 17") entre les moyens de compartimentage (7, 7') et les portions de paroi continues (5, 5') du boîtier (2) et, d'autre part, des moyens d'étanchéité individuels (18) entre les extrémités (4', 4") de chacun des éléments de batterie (4) et les moyens de compartimentage (7, 7'), soit au niveau des extrémités (4', 4") des corps cylindriques (4"') des éléments de batterie (4), soit au niveau de la face latérale de portions d'extrémité (16) desdits corps cylindriques (4"'), en retrait par rapport auxdites extrémités (4', 4").

13. Dispositif de batterie selon l'une quelconque des revendications 11 et 12, **caractérisé en ce que** les moyens de compartimentage (7, 7') consistent en des plaques pourvues de découpes (15'), entourées chacune d'un relief annulaire (15) recevant la portion d'extrémité (16) d'un élément de batterie (4), et **en ce qu'**un moyen d'étanchéité circonférentielle (18) est présent entre la plaque ajourée concernée (7, 7') et l'extrémité (4', 4") considérée de l'élément de batterie (4) concerné , ce au niveau de chaque découpe (15'), lesdites plaques (7, 7') reposant contre et/ou sur lesdites portions d'extrémité (16), avec interposition desdits moyens d'étanchéité (18).

14. Dispositif de batterie selon l'une quelconque des revendications 11 à 13, **caractérisé en ce que** chaque moyen de compartimentage (7, 7') sous forme de plaque ajourée est reçu par engagement coopérant et calé de son bord périphérique (7"'), et avec interposition d'un moyen d'étanchéité (17), dans, contre ou sur une formation interne continue (19) de la portion de paroi (5, 5') continue ou étanche correspondante du boîtier (2), cette formation consistant par exemple en un épaulement, un rebord, une aile, une nervure, une rainure ou analogue.

15. Dispositif de batterie selon l'une quelconque des revendications 1 à 10, **caractérisé en ce que**, lorsque le bloc batterie (3) est constitué par l'association mécanique et électrique d'au moins deux sous-blocs (3"'), chaque sous-bloc (3"') comprend au moins une rangée, préférentiellement au moins deux rangées arrangées en couches parallèles d'éléments de batterie (4), tous orientés longitudinalement dans le sens de la hauteur (H) ou de la largeur (L) du parallélépipède rectangle formé sensiblement par le boîtier (2) et disposés parallèlement aux faces principales de ce dernier, lesdits sous-blocs (3''') étant soit superposés comme des étages d'éléments de batterie (4) dans le sens de la hauteur (H), soit accolés entre eux latéralement dans le sens de la largeur (L), avec préférentiellement constitution et interposition d'un logement (8) intermédiaire étanche entre deux sous-blocs (3"') adjacents, un logement étanche (8") extrêmal étant présent à chacune des extrémités opposées du bloc batterie (3).

16. Dispositif de batterie selon la revendication 15, **caractérisé en ce que** chaque logement étanche (8) intermédiaire est constitué par deux moyens de compartimentage (7 et 7') en forme de plaques munies de bords (20, 20') périphériques coïncidents et mutuellement coopérant par assemblage étanche, à la manière de deux coques complémentaires, le bloc batterie (3) comportant au moins un logement étanche interstitiel (8) situé entre deux sous-blocs (3"') et deux logements extrêmaux (8') situés au niveau des deux extrémités longitudinales opposées du bloc batterie (3).

17. Dispositif de batterie selon la revendication 16, **caractérisé en ce que** le bord (20) de l'une (7) des deux plaques de compartimentage (7, 7') de chaque logement étanche (8) intermédiaire présente une structure en rainure ou gorge et **en ce que** le bord (20') de l'autre (7') des deux plaques de compartimentage présente une structure avec au moins une nervure ou aile, apte et destinée à s'emboîter dans ladite rainure ou gorge, de manière à créer une chicane entre les deux bords (20 et 20') assemblés, un joint d'étanchéité (21) étant présent dans ladite rainure (20) ou sur ladite nervure (20').

18. Dispositif de batterie selon la revendication 17, **caractérisé en ce que** l'assemblage par emboitement au niveau des bords (20, 20') des deux plaques de compartimentage (7 et 7') est verrouillé par encliquetage élastique de moyens complémentaires (20") coopérants, du type cran / encoche.

19. Dispositif de batterie selon l'une quelconque des revendications 15 à 18, **caractérisé en ce qu'**il comprend, d'une part, des logements étanches (8) intermédiaires, situés entre deux sous-blocs (3"') d'éléments (4) superposés ou adjacents et logeant les moyens d'interconnexion (10) des zones de connexion électrique (9, 9') accessibles des éléments (4) des deux sous-bloc (3"') concernés et, d'autre part, des logements étanches (8') d'extrémité, situés au niveau du bord inférieur ou supérieur ou d'un bord latéral d'un arrangement de sous-blocs (3"') superposés ou accolés, et dont la plaque (7, 7') de compartimentage externe est dépourvue de découpe (15") et constitue une paroi continue (5").

20. Dispositif de batterie selon l'une quelconque des revendications 1 à 19, caractérisé en ce le harnais rigide (26) est rapporté par accrochage avec verrouillage libérable sur le boîtier (2), au niveau de sites (25) d'accrochage de ce dernier.

21. Dispositif de batterie selon l'une quelconque des revendications 1 à 20, caractérisé en ce la poignée de transport (23) est intégrée à l'une des deux parties constitutives (2', 2") du boîtier (2) ou constituée par l'assemblage des deux parties (2', 2").

22. Dispositif de batterie selon l'une quelconque des revendications 1 à 21, **caractérisé en ce que** les éléments de batterie (4) sont du type lithium-ion ou lithium polymère et **en ce que** le boîtier (2) et les moyens de compartimentage (7, 7') sont réalisés en un matériau thermoplastique, au moins la couche de matériau extérieur des éléments de batterie (4) étant d'un type résistant aux agressions du milieu environnant.

23. Ensemble d'outil électroportatif de puissance comprenant au moins deux composantes reliées par un câble, à savoir un outil intégrant au moins un actionneur et une alimentation autonome de puissance sous la forme d'un dispositif de batterie, ensemble **caractérisé en ce que** le dispositif de batterie est un dispositif de batterie selon l'une quelconque des revendications 1 à 22.

## Patentansprüche

1. Tragbare Batterievorrichtung (1), die ein insgesamt im Wesentlichen parallelepipedförmiges Gehäuse (2) mit einer Höhe (H), einer Breite (L) und einer Dicke (E) und einen darin untergebrachten Batterieblock (3) umfasst,
wobei der Batterieblock (3) aus einer Vielzahl von Batteriezellen (4) mit länglichen, vorzugsweise zylindrisch geformten, abgedichteten Körpern (4"') mit zwei gegenüberliegenden Enden (4' und 4") zusammengesetzt ist,
wobei die Batteriezellen (4) einerseits Seite an Seite und mit einem Zwischenraum zwischen benachbarten Zellen (4) angeordnet sind, andererseits in einem Batterieblock (3) angeordnet sind, der aus einem einzigen Stück oder mindestens zwei Unterblöcken (3"') besteht, die übereinander angeordnet oder miteinander verbunden und schließlich an jedem ihrer entgegengesetzten Enden (4', 4") gemäß einer vorbestimmten Serien-/Parallelanordnung elektrisch miteinander verbunden sind und so zwei entgegengesetzte Flächen (3', 3") für die elektrische Verbindung bilden, und zwar für den Batterieblock (3) als ein einziges Stück oder für jeden Unterblock (3"'),
wobei diese Batterievorrichtung (1) auf der Höhe jeder der Verbindungsflächen (3, 3') des einstückigen Batterieblocks (3) oder jedes Unterblocks (3"') Oberflächenmittel (7, 7') zur Unterteilung des Innenvolumens des Gehäuses (2) aufweist, definierend durch Zusammenwirken mit einem der folgenden:
i. einen durchgehenden Wandabschnitt (5, 5') des Gehäuses (2),
ii. ein anderes Unterteilungsmittel (7', 7,) und
iii. eine separate durchgehende Wand (5"), wasserdichte Aufnahmen (8, 8', 8"), Batterievorrichtung (1), bei der zumindest die elektrischen Verbindungsbereiche (9, 9') der Enden (4', 4") der Batteriezellen (4) ausmünden oder in diesen dichten Aufnahmen (8, 8', 8") angeordnet sind, die die Mittel (10) zur elektrischen Verbindung der genannten Zellen (4) enthalten, und bei der die Enden (4'), 4") der Zellen (4) jeweils in abstützenden Eingriff an oder mit gegenüberliegenden Endabschnitten (16) der Körper (4"') der Batteriezellen (4) mit den gegenüberliegenden Unterteilungsmitteln (7, 7') kommen, wobei die verbleibenden Teile (11) der Körper (4"') der Zellen (4), die sich zwischen den gegenüberliegenden Unterteilungsmitteln (7, 7') befinden, durch Öffnungen oder diskontinuierliche Wandabschnitte (6) des Gehäuses (2) direkt der äußeren Umgebung ausgesetzt sind,
Vorrichtung (1), **dadurch gekennzeichnet, dass** das Gehäuse (2), das eine Hülle in Bezug auf die äußere Umgebung bildet, mit Mitteln konfiguriert und ausgestattet ist, die im Gebrauch das Tragen und den Transport der Batterievorrichtung (1) durch einen Benutzer ermöglichen, nämlich einem Gurtzeug (26) und einem Griff (23), und dass das Gehäuse (2) zwei Wandteile (5, 5') umfasst, die durchgehend und dicht sind und zwei einander gegenüberliegende Seitenwände bilden, die sich im Wesentlichen in Ebenen erstrecken, die durch die Höhe (H) und die Breite (L) definiert sind, und die die Hauptflächen des im Wesentlichen durch das Gehäuse (2) gebildeten Parallelepipeds bilden, **dadurch gekennzeichnet, dass** sich die perforierten Wandteile (6) in Umfangsrichtung zwischen den beiden vorgenannten Hauptwandteilen (5 und 5') erstrecken, durch gegenseitiges Verbinden und Definieren des größten Teils der Dicke (E), und zwar an mindestens drei Umfangsseiten des genannten quaderförmigen Gehäuses (2), vorzugsweise an mindestens den vier Umfangsseiten dieses Gehäuses (2), wobei die perforierten Wandabschnitte (6) auf der Höhe von Außenflächen angeordnet sind, die normalerweise frei sind, wenn das Gehäuse (2) getragen wird, und dass die perforierten Wandabschnitte (6) Strukturen (6') umfassen, die den Luftdurchfluss begünstigen und gleichzeitig eine Barriere gegen das Einführen von festen Körpern von außen in das Gehäuse (2) bilden, wie beispielsweise Schlitze oder Rippen mit einem aerodynamischen Profil.

2. Batterievorrichtung nach Anspruch 1, **dadurch gekennzeichnet, dass** die Unterteilungsmittel (7, 7') Reliefs oder Vertiefungen (15') (15) und Ausschnitte (15") umfassen, die ein Muster von Aufnahmestellen bilden, die die beabstandete Anordnung der Zellen (4) bestimmen und ihren seitlichen Halt und ihre Längsverkeilung gewährleisten, indem sie zumindest in Endabschnitte (16) dieser Zellen (4) eingreifen.

3. Batterievorrichtung nach einem der Ansprüche 1 und 2, **dadurch gekennzeichnet, dass** die Unterteilungsmittel (7, 7') jeweils eine perforierte Platte haben, die Ausschnitte (15') aufweist, die mit den Enden (4', 4") der verschiedenen Batteriezellen (4) zusammenfallen und jeweils einen Zugangsdurchgang zwischen dem Inneren der Aufnahme (8, 8', 8") definieren und die elektrische Verbindungsfläche (9, 9') mindestens der entsprechenden Enden (4', 4") der Batteriezellen (4), wobei diese Ausschnitte (15") vorteilhaft am Boden von Aussparungen (15') der jeweiligen Platte (7, 7') angeordnet oder von ringförmigen Aussparungen (15') umgeben sind, die die Endabschnitte (16) der Körper (4'") der Batteriezellen (4) aufnehmen.

4. Batterievorrichtung nach Anspruch 3, **dadurch gekennzeichnet, dass** die perforierten Platten (7, 7'), die Unterteilungsmittel bilden, sich jeweils in einem Stück und in einem Abstand über die Enden (4', 4") der zylindrischen Körper (4") der Batteriezellen (4) erstrecken, und dass diese perforierten Platten (7, 7'), die die gegenüberliegenden Enden (4', 4") aufnehmen, der Batteriezellen (4) zur Halterung und zum starren Halten im Gehäuse (2) und zur dichtenden Isolierung dieser Enden (4', 4") vom Innenvolumen (24) des Gehäuses (2), das mit der äußeren Umgebung in Verbindung steht, in den Bauteilen (2', 2") des starren, schützenden und tragenden Gehäuses (2) unter vollständiger Umschließung des Batteriesatzes (3) verkeilt angeordnet sind.

5. Batterievorrichtung nach Anspruch 3, **dadurch gekennzeichnet, dass** die perforierten Platten (7, 7'), die Unterteilungsmittel bilden, an den gegenüberliegenden Enden (4' und 4") der zylindrischen Körper (4") der Zellen (4) an ihren Endabschnitten (16) angebracht sind, und dass diese perforierten Platten (7, 7'), die die gegenüberliegenden Enden (4', 4") der Batteriezellen (4) aufnehmen, zur Halterung und zum starren Halten im Gehäuse (2) und zur dichtenden Isolierung dieser Enden (4', 4") vom Innenvolumen (24) des Gehäuses (2), das mit der äußeren Umgebung in Verbindung steht, in den Bauteilen (2', 2") des starren, schützenden und tragenden Gehäuses (2) unter vollständiger Umschließung des Batterieblocks (3) verkeilt angeordnet sind.

6. Batterievorrichtung nach einem der Ansprüche 3 bis 5, **dadurch gekennzeichnet, dass** jede perforierte Platte (7, 7') eine Umfangskante (7""; 20, 20') aufweist, die durch mechanischen Eingriff entweder mit einer Umfangskante (20', 20) einer anderen, gegenüberliegend angeordneten perforierte Platte (7', 7) oder mit einer inneren Ausbildung (19) eines der durchgehenden Wandabschnitte (5, 5') zusammenwirkt; (5, 5'; 5"), dies unter Zwischenschaltung eines geeigneten Dichtungsmittels (17, 17"; 21) und durch Herstellung einer Keilverbindung zwischen den beiden zusammenwirkenden Bauteilen (7, 7', 5, 5', 5").

7. Batterievorrichtung nach einem der Ansprüche 1 bis 6, **dadurch gekennzeichnet, dass** mindestens eine (8) der abgedichteten Aufnahmen (8, 8', 8"), möglicherweise das mit dem größten Volumen, Mittel (12) zur elektrischen Verbindung des Batterieblocks (3) mit einem Verbinder (12") enthält, der im Gehäuse (2) montiert ist und den Anschluss an eine oder mehrere externe Lade- oder Entladevorrichtungen ermöglicht, sowie gegebenenfalls elektronische Mittel (12) zur Verwaltung und Steuerung des Batterieblocks (3), die gegebenenfalls auf mindestens einer Karte (13) zusammengefasst sind.

8. Batterievorrichtung nach einem der Ansprüche 1 bis 7, **dadurch gekennzeichnet, dass** der einteilige Batterieblock (3) oder jeder Unterblock (3"') stattdessen eine Batteriezelle (4) in die Batteriezellenanordnung (4) integriert, einen Kanal (14) mit den gleichen Abmessungen wie eine solche Batteriezelle (4), der wie die Batteriezelle (4) starr und dicht zwischen den beiden plattenförmigen Unterteilungsmitteln (7 und 7') montiert ist und den Durchgang von elektrischen Verbindungsleitungen zwischen den dichten Aufnahmen (8, 8', 8") ermöglicht.

9. Batterievorrichtung nach einem der Ansprüche 1 bis 8, **dadurch gekennzeichnet, dass** die beiden durchgehenden und dichten Wandabschnitte (5, 5'), die einander gegenüberliegen und durch die zumindest teilweise durchbrochenen oder unterbrochenen Wandabschnitte (6) miteinander verbunden sind, jeweils zu einem Bauteil (2', 2") des Gehäuses (2) gehören und die durchbrochenen Wandabschnitte (6) vorteilhaft formschlüssig zwischen den beiden Bauteilen (2', 2") montiert oder in diese integriert sind.

10. Batterievorrichtung nach Anspruch 1, **dadurch gekennzeichnet, dass** die Schlitze oder Rippen mit einem aerodynamischen Profil in Lüftungsöffnungen in den durchbrochenen Wandteilen (6) angebracht sind.

11. Batterievorrichtung nach einem der Ansprüche 1 bis 10, **dadurch gekennzeichnet, dass** die Batteriezellen (4), wenn der Batterieblock (3) in einem Stück oder ein Monoblock ist, in Längsrichtung in Richtung der Dicke (E) und senkrecht zu den beiden Hauptflächen des durch das Gehäuse (2) gebildeten rechteckigen Parallelepipeds angeordnet sind.

12. Batterievorrichtung nach Anspruch 11, **dadurch gekennzeichnet, dass** sie einerseits durchgehende Umfangsdichtungsmittel (17, 17") zwischen den Unterteilungsmitteln (7, 7') und den durchgehenden Wandteilen (5, 5') des Gehäuses (2) und andererseits einzelne Dichtungsmittel (18) zwischen den Enden (4', 4") jeder der Batteriezellen (4) und der Unterteilungsmittel (7, 7') umfasst, wobei entweder an den Enden (4', 4") der zylindrischen Körper (4''') der Batteriezellen (4) oder an der Seitenfläche von Endabschnitten (16) der zylindrischen Körper (4'''), die in Bezug auf die Enden (4', 4") zurückgesetzt sind.

13. Batterievorrichtung nach einem der Ansprüche 11 und 12, **dadurch gekennzeichnet, dass** die Unterteilungsmittel (7, 7') Platten aufweisen, die mit Ausschnitten (15') versehen sind, die jeweils von einem ringförmigen Relief (15) umgeben sind, das den Endteil (16) einer Batteriezelle (4) aufnimmt, und dass ein umlaufendes Dichtungsmittel (18) zwischen der betreffenden perforierten Platte (7, 7') und dem betreffenden Ende (4', 4") der betreffenden Batteriezelle (4) vorhanden ist, und zwar in Höhe jedes Ausschnitts (15'), wobei die genannten Platten (7, 7') an und/oder auf den genannten Endabschnitten (16) unter Zwischenschaltung des genannten Dichtungsmittels (18) anliegen.

14. Batterievorrichtung nach einem der Ansprüche 11 bis 13, **dadurch gekennzeichnet, dass** jedes Unterteilungsmittel (7, 7') in Form einer perforierten Platte durch zusammenwirkenden und verkeilten Eingriff seiner Umfangskante (7'") und unter Zwischenschaltung eines Dichtungsmittels (17) in, gegen oder auf einer durchgehenden inneren Ausbildung (19) des entsprechenden durchgehenden oder dichten Wandteils (5, 5') des Gehäuses (2) aufgenommen wird, wobei die Ausbildung beispielsweise eine Schulter, einen Flansch, einen Flügel, eine Rippe, eine Nut oder dergleichen aufweist.

15. Batterievorrichtung nach einem der Ansprüche 1 bis 10, **dadurch gekennzeichnet, dass**, wenn der Batterieblock (3) aus der mechanischen und elektrischen Kombination von mindestens zwei Unterblöcken (3"') besteht, jeder Unterblock (3"') mindestens eine Reihe umfasst, vorzugsweise mindestens zwei parallele, geschichtete Reihen von Batteriezellen (4), die alle in Längsrichtung in Richtung der Höhe (H) oder Breite (L) des im Wesentlichen durch das Gehäuse (2) gebildeten rechteckigen Parallelepipeds ausgerichtet und parallel zu dessen Hauptflächen angeordnet sind, wobei die Unterblöcke (3"') entweder wie Stufen von Batteriezellen (4) in Richtung der Höhe (H) übereinander angeordnet sind oder seitlich in Richtung der Breite (L) miteinander verbunden sind, vorzugsweise unter Bildung und Zwischenschaltung einer abgedichteten Zwischenaufnahme (8) zwischen zwei benachbarten Unterblöcken (3"'), wobei eine endabgedichtete Aufnahme (8") an jedem der gegenüberliegenden Enden des Batteriesatzes (3) vorhanden ist.

16. Batterievorrichtung nach Anspruch 15, **dadurch gekennzeichnet, dass** jede abgedichtete Zwischenaufnahme (8) mit zwei plattenförmigen Unterteilungsmitteln (7 und 7') gebildet wird, die mit zusammenfallenden Umfangsrändern (20, 20') versehen sind und durch dichte Verbindung nach Art von zwei komplementären Schalen zusammenwirken, wobei der Batterieblock (3) mindestens eine abgedichtete Zwischenaufnahme (8), das zwischen zwei Unterblöcken (3") angeordnet ist, und zwei Endaufnahmen (8') umfasst, die an den beiden gegenüberliegenden Längsenden des Batterieblocks (3) angeordnet sind.

17. Batterievorrichtung nach Anspruch 16, **dadurch gekennzeichnet, dass** der Rand (20) der einen (7) der beiden Unterteilungsplatten (7, 7') jeder abgedichteten Zwischenaufnahme (8) eine Rillen- oder Kanalstruktur aufweist und dass der Rand (20') der anderen (7') der beiden Unterteilungsplatten eine Struktur mit mindestens einer Rippe oder einem Flansch aufweist, welche angepasst und dazu bestimmt ist, in die Nut oder Rille zu passen, um eine Schikane zwischen den beiden zusammengefügten Rändern (20 und 20') zu erzeugen, wobei eine Dichtung (21) in der Nut (20) oder auf der Rippe (20') vorhanden ist.

18. Batterievorrichtung nach Anspruch 17, **dadurch gekennzeichnet, dass** der Zusammenbau durch Verschachtelung an den Rändern (20, 20') der beiden Unterteilungsplatten (7 und 7') durch elastisches Einrasten von komplementären, zusammenwirkenden Mitteln (20") des Typs Feder / Nut verriegelt wird.

19. Batterievorrichtung nach einem der Ansprüche 15 bis 18, **dadurch gekennzeichnet, dass** sie einerseits dichte Zwischenaufnahmen (8), die zwischen zwei Unterblöcken (3"') von übereinanderliegenden oder benachbarten Zellen (4) angeordnet sind und die Verbindungsmittel (10) der elektrischen Verbindungszonen (9, 9') aufnehmen, welche zugänglich von den Elementen (4) der beiden betreffenden Unterblöcke (3"') sind, und andererseits endseitig abgedichteten Aufnahmen (8'), die sich in Höhe des unteren oder oberen Randes oder eines Seitenrandes einer Anordnung von übereinanderliegenden oder aneinandergrenzenden Unterblöcken (3''') befinden und deren äußere Unterteilungsplatte (7, 7') frei von Ausschnitten (15") ist und eine durchgehende Wand (5") bildet, aufweist.

20. Batterievorrichtung nach einem der Ansprüche 1 bis 19, **dadurch gekennzeichnet, dass** das starre Gurtzeug (26) durch Einhaken mit lösbarer Verriegelung am Gehäuse (2) an dessen Einhakstellen (25) befestigt ist.

21. Batterievorrichtung nach einem der Ansprüche 1 bis 20, **dadurch gekennzeichnet, dass** der Tragegriff (23) in eines der beiden Bauteile (2', 2") des Gehäuses (2) integriert ist oder durch das Zusammenfügen der beiden Teile (2', 2") gebildet wird.

22. Batterievorrichtung nach einem der Ansprüche 1 bis 21, **dadurch gekennzeichnet, dass** die Batteriezellen (4) vom Lithium-Ionen- oder Lithium-Polymer-Typ sind und dass das Gehäuse (2) und die Unterteilungsmittel (7, 7') aus einem thermoplastischen Material hergestellt sind, wobei zumindest die äußere Materialschicht der Batteriezellen (4) von einem Typ ist, der gegen die Angriffe der umgebenden Umwelt beständig ist.

23. Angetriebene Werkzeugmaschine mit mindestens zwei durch ein Kabel verbundenen Komponenten, nämlich einem Werkzeug mit mindestens einem Stellglied und einer autonomen Stromversorgung in Form einer Batterievorrichtung, **dadurch gekennzeichnet, dass** die Batterievorrichtung eine Batterievorrichtung nach einem der Ansprüche 1 bis 22 ist.

## Claims

1. A portable battery device (1) including a casing (2) that is overall substantially parallelepipedic in shape, having a height (H), a width (L), and a thickness (E), and a battery unit (3) that is housed in the casing,
the battery unit (3) being composed of a plurality of battery elements (4) with elongated watertight bodies (4"'), preferably of cylindrical shape, comprising two opposite ends (4' and 4"),
the battery elements (4) being, on the one hand, placed side by side and with an interstitial space between neighbouring elements (4), on the other hand arranged in a battery unit (3) constituted by one piece or by at least two sub-units (3"') that are placed on top of one another or adjacent to one another, and, finally, connected electrically to one another at each of their opposite ends (4', 4") according to a predetermined serial/parallel assembly, thus forming two opposite electrical connection faces (3', 3"), for the battery unit (3) in one piece or for each sub-unit (3"'),
this battery device (1) including, at each of the connection faces (3, 3') of the battery unit (3) in a single piece or of each sub-unit (3"'), surface means (7, 7') for compartmentalizing the inner volume of the casing (2) defining by cooperation with one from among: i) a continuous wall portion (5, 5') of said casing (2), ii) another compartmentalization means (7', 7), and iii) a separate continuous wall (5"), watertight housings (8, 8', 8"),
battery device (1), in which at least the zones (9, 9') for electrical connection of the ends (4', 4") of the battery elements (4) open into or are placed in these watertight housings (8, 8', 8"), which contain the means (10) for electrical connection of said elements (4), and in which the ends (4', 4") of the elements (4) come respectively in supporting engagement on or with opposite end portions (16) of the bodies (4"') of the battery elements (4) with the opposite compartmentalization means (7, 7'), the remaining parts (11) of the bodies (4"') of said elements (4) located between said opposite compartmentalization means (7, 7') being exposed directly to the outside environment through perforated or discontinuous wall portions (6) of the casing (2),
device (1), **characterized in that** the casing (2), forming a cover in relation to the outside environment, is configured and equipped with means to make possible, while in use, the carrying and the transport of said battery device (1) by a user, namely a harness (26) and a handle (23), **in that** said casing (2) comprises two continuous and watertight wall portions (5, 5') that form two opposing side walls extending substantially in planes defined by the height (H) and the width (L) and constitute the principal faces of the parallelepiped that is formed substantially by the casing (2), **in that** the perforated wall portions (6) extend peripherally between the two above-mentioned principal wall portions (5 and 5'), by connecting them to one another and by defining for the most part the thickness (E), over at least three peripheral sides of said parallelpipedic casing (2), preferably over at least the four peripheral sides of this casing (2), said perforated wall portions (6) being situated at outside surfaces that are normally released when the casing (2) is carried, and **in that** the perforated wall portions (6) comprise structures (6') that promote the circulation of passing air and forming simultaneously a barrier against the introduction of solid bodies from the outside into the casing (2), such as for example slots or fins with aerodynamic profile.

2. A battery device according to Claim 1, **characterized in that** the compartmentalization means (7, 7') include reliefs or recesses (15') (15) and cut-outs (15") forming a pattern of receiving sites that determines the spaced arrangement of the elements (4) and that ensures their lateral support and their longitudinal wedging, by coming into engagement with the end portions (16) at least of these elements (4).

3. A battery device according to any one of Claims 1 and 2, **characterized in that** the compartmentalization means (7, 7') each consist of a perforated plate, having cut-outs (15') that coincide with the ends (4', 4") of the different battery elements (4) and each defining an access path between the interior of the adjoining housing (8, 8', 8") and the electrical connection zone (9, 9') at least of the corresponding ends (4', 4") of the battery elements (4), these cut-outs (15") advantageously being located at the bottom of recesses (15') of the plate (7, 7') in question or surrounded by annular reliefs (15') receiving the end portions (16) of the bodies (4"') of the battery elements (4).

4. A battery device according to Claim 3, **characterized in that** the perforated plates (7, 7') forming compartmentalization means each extend in one piece and at a distance above the ends (4', 4") of the cylindrical bodies (4"') of the battery elements (4), and **in that** these perforated plates (7, 7'), which receive the opposite ends (4', 4") of the battery elements (4) to support them and to keep them rigidly in position in the casing (2) and to insulate in a watertight manner these ends (4', 4") in relation to the inner volume (24) of the casing (2) in communication with the outside environment, are mounted in a wedged manner in the constituent parts (2', 2") of the rigid, protective, and carrying casing (2), covering the battery unit (3) in its entirety.

5. A battery device according to Claim 3, **characterized in that** the perforated plates (7, 7') forming compartmentalization means are fitted on the opposite ends (4', 4") of the cylindrical bodies (4") of the elements (4) at their end portions (16), and **in that** these perforated plates (7, 7'), which receive the opposite ends (4', 4") of the battery elements (4) to support them and to keep them rigidly in position in the casing (2) and to insulate these ends (4', 4") in a watertight manner in relation to the inner volume (24) of the casing (2) in communication with the outside environment, are mounted in a wedged manner in the constituent parts (2', 2") of the rigid, protective, and carrying casing (2), covering the battery unit (3) in its entirety.

6. A battery device according to any one of Claims 3 to 5, **characterized in that** each perforated plate (7, 7') comprises a peripheral edge (7"'; 20, 20') cooperating by mechanical engagement either with a peripheral edge (20', 20) of another perforated plate (7', 7) placed opposite, or with an inner formation (19) of one of the continuous wall portions (5, 5'; 5"), with interposition of a suitable sealing means (17, 17"; 21) and by realizing a wedged mounting between the two components (7, 7', 5, 5', 5") which cooperate.

7. A battery device according to any one of Claims 1 to 6, **characterized in that** at least one (8) of the watertight housings (8, 8', 8"), possibly that with the greatest volume, contains means (12) for electrical connection of the battery unit (3) to a connector (12") that is mounted in the casing (2) and permitting a connection to one or more outside charging or discharging device(s) and also possibly electronic management and control means (12) of the battery unit (3), if applicable grouped together on at least one board (13).

8. A battery device according to any one of Claims 1 to 7, **characterized in that** the battery unit (3) in a single piece or each sub-unit (3"') integrates, instead of a battery element (4) in the arrangement of battery elements (4), a pipe (14) of the same dimensions as such a battery element (4) and mounted in a rigid and watertight manner, like the battery elements (4) between the two compartmentalization means (7 and 7') in the form of plates, permitting the passage of electrical connecting lines between the watertight housings (8, 8', 8").

9. A battery device according to any one of Claims 1 to 8, **characterized in that** the two continuous and watertight wall portions (5, 5'), opposite to one another and connected to one another by the wall portions (6) that are at least partially perforated or discontinuous, each belong to a constituent part (2', 2") of the casing (2), and the perforated wall portions (6) are advantageously mounted with engagement by fitting between the two constituent parts (2', 2") or integrated with the latter.

10. A battery device according to Claim 1, **characterized in that** the slots or fins with aerodynamic profile are mounted in aeration openings arranged in the perforated wall portions (6).

11. A battery device according to any one of Claims 1 to 10, **characterized in that** when the battery unit (3) is in a single piece or monobloc, the battery elements (4) are disposed longitudinally in the direction of the thickness (E) and perpendicularly to the two principal faces of the rectangular parallelepiped formed by the casing (2).

12. A battery device according to Claim 11, **characterized in that** it comprises, on the one hand, continuous peripheral sealing means (17, 17") between the compartmentalization means (7, 7') and the continuous wall portions (5, 5') of the casing (2), and on the other hand individual sealing means (18) between the ends (4', 4") of each of the battery elements (4) and the compartmentalization means (7, 7'), either at the ends (4', 4") of the cylindrical bodies (4"') of the battery elements (4) or at the lateral face of end portions (16) of said cylindrical bodies (4"'), set back in relation to said ends (4', 4").

13. A battery device according to any one of Claims 11 and 12, **characterized in that** the compartmentalization means (7, 7') consist of plates that are provided with cut-outs (15'), each surrounded by an annular relief (15) receiving the end portion (16) of a battery element (4), and **in that** a circumferential sealing means (18) is present between the perforated plate (7, 7') in question and the end (4', 4") in question of the battery element (4) in question, at each cut-out (15'), said plates (7, 7') resting against and/or on said end portions (16), with interposition of said sealing means (18).

14. A battery device according to any one of Claims 11 to 13, **characterized in that** each compartmentalization means (7, 7') in the form of a perforated plate is received by cooperating and wedged engagement of its peripheral edge (7"'), and with interposition of a sealing means (17), in, against, or on a continuous inner formation (19) of the corresponding continuous or watertight wall portion (5, 5') of the casing (2), this formation consisting of, for example, a shoulder, a rim, a wing, a rib, a groove, or the like.

15. A battery device according to any one of Claims 1 to 10, **characterized in that** when the battery unit (3) is constituted by the mechanical and electrical association of at least two sub-units (3"'), each sub-unit (3''') includes at least one row, preferably at least two rows arranged in parallel layers of battery elements (4), all oriented longitudinally in the direction of the height (H) or the width (L) of the rectangular parallelepiped that is formed substantially by the casing (2) and disposed parallel to the principal faces of the latter, with said sub-units (3"') being either superposed like stages of battery elements (4) in the direction of the height (H), or adjacent to one another laterally in the direction of the width (L), with preferably constitution and interposition of a tight intermediate housing (8) between two adjacent sub-units (3"'), an end watertight housing (8") being present at each of the opposite ends of the battery unit (3).

16. A battery device according to Claim 15, **characterized in that** each intermediate watertight housing (8) is constituted by two compartmentalization means (7 and 7') in the form of plates equipped with peripheral edges (20, 20') that coincide and cooperate with each other by watertight assembly, in the manner of two complementary shells, the battery unit (3) comprising at least one interstitial watertight housing (8) situated between two sub-units (3"') and two end housings (8') situated at the two opposite longitudinal ends of the battery unit (3).

17. A battery device according to Claim 16, **characterized in that** the edge (20) of one (7) of the two compartmentalization plates (7, 7') of each intermediate watertight housing (8) has a groove or recess structure and **in that** the edge (20') of the other (7') of the two compartmentalization plates has a structure with at least one rib or wing, suitable and intended to be fitted into said groove or recess, in such a manner as to create a baffle between the two assembled edges (20 and 20'), a seal (21) being present in said groove (20) or on said rib (20').

18. A battery device according to Claim 17, **characterized in that** the assembly by fitting at the edges (20, 20') of the two compartmentalization plates (7 and 7') is locked by elastic snapping-on of cooperating complementary means (20") of the catch/notch type.

19. A battery device according to any one of Claims 15 to 18, **characterized in that** it includes, on the one hand, watertight intermediate housings (8), situated between two sub-units (3"') of elements (4) that are superposed or adjacent and housing the interconnection means (10) of the accessible electrical connection zones (9, 9') of the elements (4) of the two sub-units (3"') in question and, on the other hand, end watertight housings (8'), situated at the lower or upper edge or a lateral edge of an arrangement of sub-units (3"') superposed or adjacent, and of which the outer compartmentalization plate (7, 7') has no cut-out (15") and constitutes a continuous wall (5").

20. A battery device according to any one of Claims 1 to 19, **characterized in that** the rigid harness (26) is borne by hooking with releasable locking on the casing (2), at the hooking points (25) of the latter.

21. A battery device according to any one of Claims 1 to 20, **characterized in that** the transport handle (23) is integrated with one of the two constituent parts (2', 2") of the casing (2) or constituted by the assembly of the two parts (2', 2").

22. A battery device according to any one of Claims 1 to 21, **characterized in that** the battery elements (4) are of the lithium-ion or lithium polymer type, and **in that** the casing (2) and the compartmentalization means (7, 7') are made of a thermoplastic material, with at least the layer of outer material of the battery elements (4) being of a type that is resistant to attacks from the surrounding environment.

23. A portable electric power tool set including at least two components that are connected by a cable, namely a tool integrating at least one actuator and an autonomous power supply in the form of a battery device, said set **characterized in that** the battery device is a battery device according to any one of Claims 1 to 22.
